# EUROPEAN PATENT APPLICATION

(11) **EP 4 474 930 A1**
(43) Date of publication of application: **11.12.2024**
(21) Application number: 23178121.2
(22) Date of filing: 07.06.2023
(51) Int. Cl.: G05B 19/418

(54) **A MONITORING DEVICE AND A MONITORING METHOD FOR A SPINNING MILL FOR DETERMINING STATUS INFORMATION ABOUT THE SPINNING MILL**

(71) Applicant: Rieter AG, 8406 Winterthur (CH)
(72) Inventor: PATIL, Nitin Tukaram, 8406 Winterthur (CH)

(57) **Abstract**

This disclosure relates to a monitoring device (9) for a spinning mill (M) for determining status information (S) about the spinning mill (M), wherein the spinning mill (M) comprises a plurality of textile machines (12,23,34,45,56,67) for processing textile materials (1,2,3,4,5,6,7). The monitoring device (9) is configured to:
record textile statistics (91) about textile irregularities in the textile materials (1,2,3,4,5,6,7) being processed by the textile machines (12,23,34,45,56,67),
record machine statistics (92) about machine faults at the textile machines (12,23,34,45,56,67) during processing of the textile materials (1,2,3,4,5,6,7),
activate a status processor (94) for processing the textile statistics (91) and the machine statistics (92) for determining the status information (S), in particular based on one or more of a knowledge base (kb), a set of rules (rl) and an artificial intelligence machine (ai).

## Description

### Field of invention

This disclosure relates to a monitoring device and a monitoring method for a spinning mill for determining status information about the spinning mill.

### Description of related art

Spinning mills can include large numbers of textile machines for processing natural or man-made fibers into yarn. For example, textile machines can include blowroom machines, draw frame machines, comber machines, roving frame machines, spinning machines, winding machines, etc. It is known that thick places in textile materials can have a negative impact on, for example, roving breaks, ring yarn breaks, winder clearer cuts, etc., which can decrease yarn quality, decrease production efficiency, lead to downtime, increase maintenance costs, lead to uneven winding, etc. In today's scenarios, these problems are tried to be solved by manual and subjective adjustments.

USTER classimat enables classification and analysis of yarn faults. For example, classes include A4, B4, C4, D4, C3, D3. Each fault is identified by an alphabet and a number. The alphabet represents the length range of the fault and the number indicates the dimensional size of the fault.

### Brief summary of the invention

There may be a need for an improved monitoring device and an improved monitoring method for a spinning mill for determining status information about the spinning mill.

Such a need may be met by the subject-matter of the independent claims. Advantageous embodiments are defined in the dependent claims.

An aspect of the invention relates to a monitoring device for a spinning mill for determining status information about the spinning mill. The spinning mill comprises a plurality of textile machines for processing textile materials. The monitoring device is configured to: record textile statistics about textile irregularities in the textile materials being processed by the textile machines, record machine statistics about machine faults at the textile machines during processing of the textile materials, activate a status processor for processing the textile statistics and the machine statistics for determining the status information, in particular based on one or more of a knowledge base, a set of rules and an artificial intelligence machine. For example, correlating textile statistics with machine statistics can enable to determine status information which includes information about a malfunction within the spinning mill.

In some embodiments, processing the textile statistics and the machine statistics includes one or more of a correlation analysis, a cluster analysis, and a trend analysis. For example, in case a correlation analysis results in status information which insufficient information, a cluster analysis and/or a trend analysis can enable status information with sufficient information.

In some embodiments, processing the textile statistics and the machine statistics relates to one of a single textile machine and a group of textile machines. For example, status information about a single machine can be determined. For example, status information about textile machines can be determined which are arranged in a serial fashion from upstream to downstream. For example, status information about textile machines can be determined which are arranged in a parallel fashion.

In some embodiments, textile irregularities relate to a deviation from a nominal condition of one or more of a coefficient of a density and/or of a thickness, a coefficient of a variation of a density and/or a variation of a thickness, a spectrogram, a coefficient relating to short fibers, a coefficient relating to neps, and a coefficient relating to trash. For example, status information can be determined based on textile irregularities which are widely recorded in spinning mills.

In some embodiments, the textile machines relate to one or more of a blowroom machine, a carding machine, a draw frame machine, a carding preparation machine, a comber machine, a roving machine, a spinning machine, and a winding machine.

In some embodiments, machine faults relate to one or more of a roving break, a yarn break, and a clearer cut on a winder. For example, status information can be determined based on machine faults which are widely recorded in spinning mills.

In some embodiments, the monitoring device is further configured to record machine settings of one or more textile machines, wherein the status processor is further configured for additionally processing the machine settings for determining the status information.

In some embodiments, machine settings relate to one or more of a machine maintenance information and machine operating parameters.

In some embodiments, the status processor is further configured to determine status information which includes information about a malfunction within the spinning mill, preferably with information about a possible adjustment within the spinning mill for resolving the malfunction, preferably together with information about a likelihood of success.

The invention also relates to a spinning mill management system for a spinning mill comprising a monitoring device.

The invention also relates to a method for determining status information about a spinning mill which comprises a plurality of textile machines for processing textile materials. At a monitoring device the steps are performed of: recording textile statistics about textile irregularities in the textile materials being processed by the textile machines, recording machine statistics about machine faults at the textile machines during processing of the textile materials, activating a status processor for processing the textile statistics and the machine statistics for determining the status information, in particular based on one or more of a knowledge base, a set of rules and an artificial intelligence machine.

In some embodiments, processing the textile statistics and the machine statistics includes one or more of a correlation analysis, a cluster analysis, and a trend analysis.

In some embodiments, textile irregularities relate to a deviation from a nominal condition of one or more of a coefficient of a density and/or of a thickness, a coefficient of a variation of a density and/or a variation of a thickness, and a spectrogram.

In some embodiments, machine faults relate to one or more of a roving break, a yarn break, and a clearer cut on a winder.

In some embodiments, at the monitoring device the step is performed of: recording machine settings of one or more textile machines, and activating the status processor for additionally processing the machine settings for determining the status information.

### Brief description of drawings

The invention will be better understood with the aid of the description of an embodiment given by way of example an illustrated by the figures, in which:
Fig. 1 illustrates schematically a spinning mill and a monitoring device according to the present invention;
Fig. 2 illustrates schematically a diagram for detecting events of thick places in a textile material;
Fig. 3 illustrates schematically an example of a status information about a spinning mill; and
Fig. 4 illustrates schematically possible method steps of a monitoring method according to the present invention.

### Detailed Description of the invention

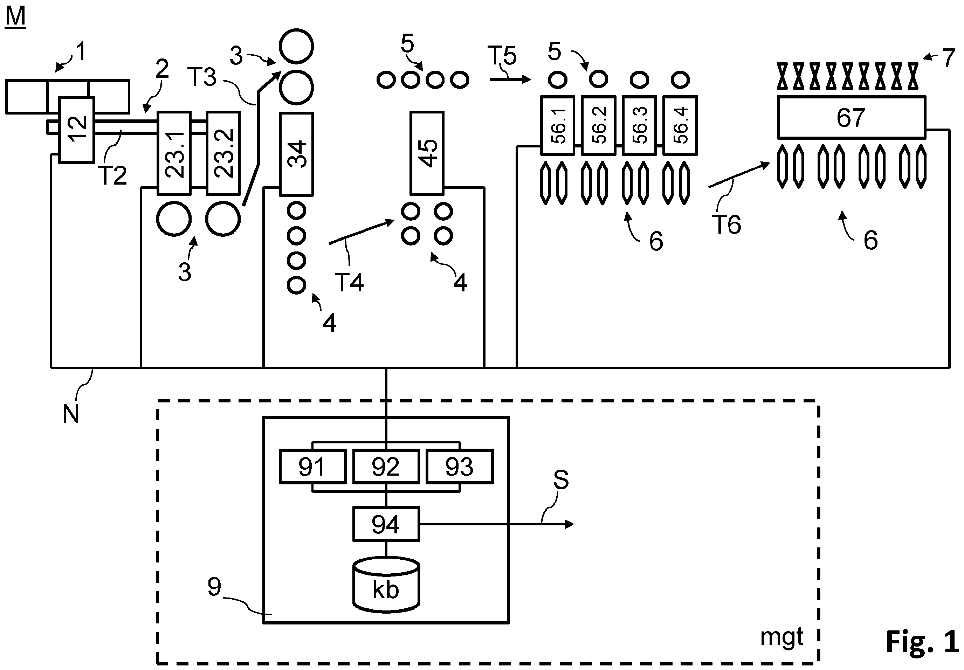

Fig. 1 illustrates schematically a spinning mill M. Fig. 1 further illustrates schematically a monitoring device 9 for monitoring the spinning mill M according to the present invention.

As illustrated in Fig. 1, the spinning mill M includes a plurality of textile machines 12, 23, 34, 45, 56, 67. In particular, the textile machines 12, 23, 34, 45, 56, 67 are configured for processing an input textile material 1, such as natural or man-made fibers, into an output textile material 7, such as yarn arranged on yarn bobbins. As indicated in Fig. 1 with reference numerals 23.1, 23.2, 56.1, 56.2, 56.3, 56.4, textile machines can be arranged in a parallel configuration at particular locations, for example for the purpose of increased capacity, for the purpose of redundancy, etc. The textile machines 12, 23, 34, 45, 56, 67 receive upstream a textile material 1, 2, 3, 4, 5, 6, process the received textile material, a deliver downstream the processed textile material 2, 3, 4, 5, 6, 7. The textile machines 12, 23, 34, 45, 56, 67 can relate to blowroom machines, carding machines, draw frame machines, carding preparation machines, comber machines, roving machines, spinning machines, winding machines, etc. As indicated in Fig. 1, the spinning mill M includes transport systems T2, T3, T4, T5, T6 for transporting textile materials 2, 3, 4, 5, 6 from upstream textile machines 1, 2, 3, 4, 5, 6 to downstream textile machines 2, 3, 4, 5, 6, 7, for example duct systems, trolley systems, rail systems, etc.

As illustrated in Fig. 1, the spinning mill includes a signaling network N, such as a computer network enabling IP (IP: Internet Protocol). As illustrated in Fig. 1, the signaling network N is connected to one or more textile machines 12, 23, 34, 45, 56, 67. For example, the signaling network N is connected to other elements of the spinning mill M, such as the transport systems T1, T2, T3, T4, T5, T6, laboratories for analyzing parameters of textile materials, sensors for sensing a temperature and/or humidity, etc. For example, a spinning mill management system mgt can be arranged for controlling operation of the spinning mill M via the signaling network N.

As illustrated in Fig. 1, the monitoring device 9 is connected to the signaling network N.

The monitoring device 9 is configured to record textile statistics about textile irregularities in textile materials 1, 2, 3, 4, 5, 6, 7 being processed by the textile machines 12, 23, 34, 45, 56, 67.

For example, the monitoring device 9 can be configured to access sensors arranged in the spinning mill, for example attached to the textile machines 12, 23, 34, 45, 56, 67. For example, a sensor can be arranged to measure a thickness of a textile material. For example, if the thickness exceeds a threshold for a predefined time or length, an event of a thick place can be signaled and recorded.

The monitoring device 9 can be configured to record textile statistics about textile irregularities in textile materials 1, 2, 3, 4, 5, 6, 7 which relate to for example thick and/or thin places in sliver and/or roving and/or yarn, which relate to CV %, neps, shortfiber, trash, etc.

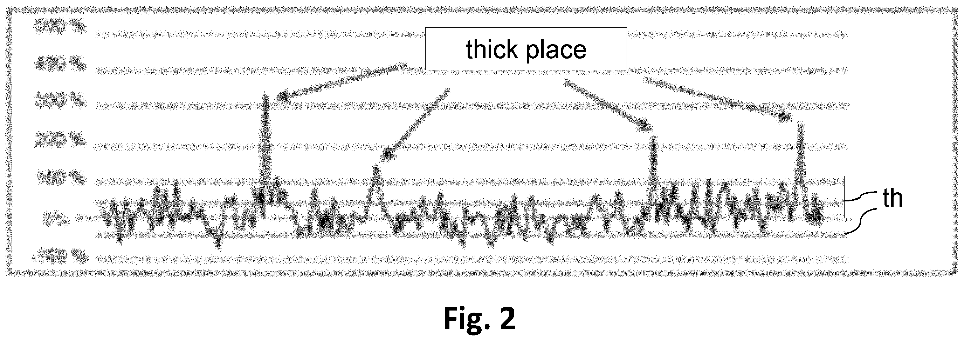

Fig. 2 illustrates schematically a diagram for detecting events of thick places in a textile material. Horizontal direction in the diagram relates to time or length of textile material. Vertical direction relates to a relative thickness in percent. An event of a thick place is detected and recorded if the relative thickness exceeds a threshold th for a predefined amount of time or length of textile material.

The monitoring device 9 can be configured to record textile statistics about textile irregularities which relate to a deviation from a nominal condition of a coefficient of density, a coefficient of thickness, a coefficient of a variation of density, a coefficient of a variation of thickness, a spectrogram, etc.

The monitoring device 9 is configured to record machine statistics about machine faults at the textile machines 12, 23, 34, 45, 56, 67 processing the textile materials 1, 2, 3, 4, 5, 6, 7.

For example, the textile machines 1, 2, 3, 4, 5, 6, 7 can be configured to signal respective machine faults, which are then recorded by the monitoring device 9.

The monitoring device 9 can be configured to record machine statistics about machine faults which relate to a roving break, for example at a roving frame machine, a yarn break, for example at a spinning machine, a cut on a winder, for example at a winding machine, etc.

The monitoring device 9 is configured to activate a status processor for processing the textile statistics 91 and the machine statistics 92 for determining the status information S.

The monitoring device 9 can be configured to activate a status processor for processing the textile statistics 91 and the machine statistics 92 for determining the status information S based on a knowledge base kb, a set of rules rl and/or an artificial intelligence machine. For example, based on a knowledge base kb as further described below. For example, based on a set of rules rl such as if thick places at a draw frame machine of a first type deviate from a nominal condition repeatedly and the number of clearer cuts at a winding machine of a first type are within nominal condition, status information S determined indicating that maintenance of the draw frame machine of the first type is suggested. For example, based on an artificial intelligence machine, textile statistics 91 and machine statistics 92 of a long term operation of a spinning mill M can be processed for determining the status information S.

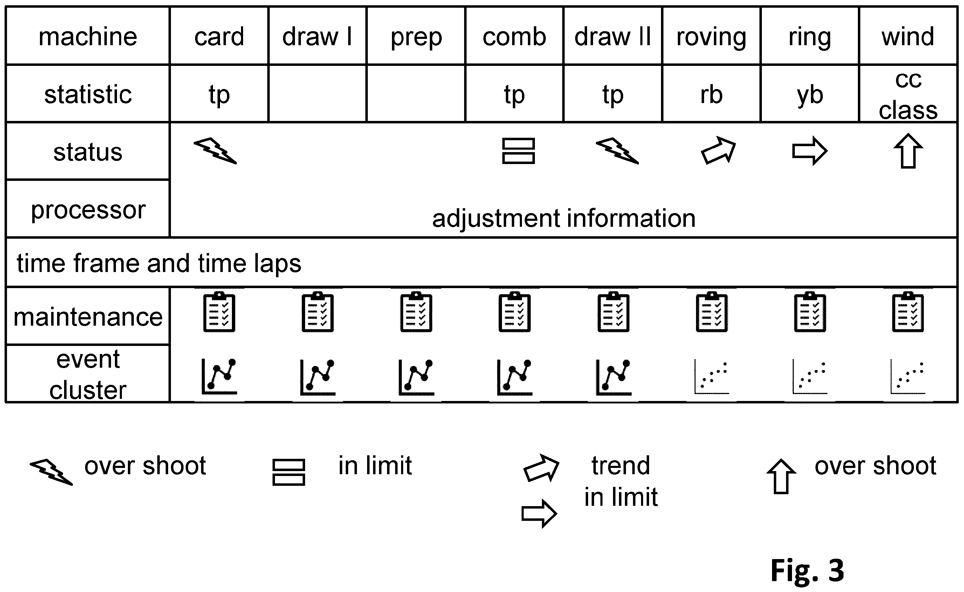

Fig. 3 illustrates schematically an example of a status information S about a spinning mill M.

The status information S includes information about textile machines in the spinning mill M, which include a carding machine card, a first draw frame machine draw I, a combing preparation machine prep, a combing machine comb, a second draw frame machine draw II, a roving frame machine roving, a ring spinning machine ring, and a winding machine wind.

As illustrated according to the example of Fig. 3, the monitoring device 9 records textile statistics in the form of thick places tp at the carding machine card, at the combing machine comb and at the second draw frame machine draw II. The monitoring device 9 records machine statistics in the form of roving breaks rb at the rowing machine roving, in the form of yarn breaks yb at the ring spinning machine ring and in the form of clearer cuts cc at the winding machine wind.

Furthermore, according to the example of Fig. 3, the monitoring device 9 records classimat classes at the winding machine.

As illustrated according to the example of Fig. 3, the status processor 94 determines from the recorded textile statistics and the recorded machine statistics information about malfunctions within the spinning mill M. According to the example of Fig. 3, the thick places tp over shoot at the carding machine card and at the draw frame machine draw II, the thick places tp are within limits at the combing machine comb, the number of roving breaks rb at the roving machine roving and the number of yarn breaks yb at the ring spinning machine are within limits, and the number of clearer cuts cc over shoots at the winding machine wind. Based on a knowledge base kb, the status processor 94 determines information about a possible adjustment within the spinning mill M. As illustrated in Fig. 3, for the purpose of determining information about a possible adjustment within the spinning mill M, the status processor 94 can additionally process recorded machine settings 93, for example in the form of maintenance information. As illustrated in the example of Fig. 3, the status processor 94 can be configured to build event clusters of textile irregularities, such as of thick places, and of machine faults, such as roving breaks, yarn breaks, clearer cuts, etc.

For enabling to determine the status information, in particular information about a malfunction within the spinning mill M, the knowledge base kb can include the following knowledge.

Uneven feeding of fibers into a carding machine can cause areas of sliver to be thicker than others.

A dirty carding machine can cause fibers to become tangled and knotted, which can result in thick places in the sliver.

Incorrect carding machine settings can cause to be carded too tightly or too loosely, which can result in thick (or thin) places in sliver.

Incorrectly prepared fibers which are for example not scoured or opened properly, can result in thick places in the sliver.

Inconsistent fiber quality can cause thick places in the sliver.

Improper comber machine settings can cause some areas of the sliver to be thicker than others, for example in case the comber's cylinder and doffer are not adjusted correctly, if the comber's cleaning system is not functioning properly, etc.

Uneven fiber feeding into a comber can cause some areas of the sliver to be thicker than others.

Improper fiber preparation, for example as not having a predetermined length or being kinky above a predetermined level, can cause some areas of the sliver to be thicker than others.

Uneven feeding of card sliver into a draw frame machine can cause some areas of the draw frame sliver to be thicker than others.

A dirty draw frame machine can cause fibers to become tangled and knotted, which can result in thick places in the sliver.

Incorrect draw frame machine settings can cause the fibers to be drawn too tightly or too loosely, which can result in thick (or thin) places in the sliver.

Incorrectly prepared card sliver, such as not being cleaned or opened properly, can lead to thick places in the draw frame sliver.

Inconsistent fiber quality can cause thick places in the draw frame sliver.

Roving breaks occur when the roving (the intermediate stage between sliver and yarn) breaks during the spinning process, which can have several reasons such as weak fibers, poor drafting, improper tension, etc. Roving breaks can cause interruptions in the spinning process and can lead to uneven yarn and a decrease in productivity.

Yarn breaks can be caused by a variety of factors, which include thick places in a sliver. When there are thick places in a sliver, the fibers in those areas are more densely packed than in the surrounding areas, causing the sliver to have an uneven thickness. When the sliver is then processed on a ring frame, the uneven thickness can cause variations in the yarn being produced, which can lead to yarn breaks.

Yarn breaks can also be caused by other factors such as poor drafting, improper tension, weak fibers, or machine wear and tear. Improper machine setting, poor fiber preparation can also contribute to yarn breaks.

Yarn quality cuts on a winder can be caused by a variety of factors, including thick places in a sliver. When there are thick places in a sliver, the fibers in those areas are more densely packed than in the surrounding areas, causing the sliver to have an uneven thickness. When the sliver is then processed on a ring frame, the uneven thickness can cause variations in the yarn being produced, which can lead to yarn quality cuts during a winding process.

Yarn quality cuts can also be caused by other factors such as poor drafting, improper tension, weak fibers, machine wear and tear, improper machine setting, operator error, poor fiber preparation and winder setting.

The monitoring device 9 can be configured to determine status information S about each textile machine 12, 23, 34, 45, 56, 67 (within process) as well as determine status information S about a sequence of textile machines 12, 23, 34, 45, 56, 67 (across process).

Accordingly, with reference to the example illustrated in Fig. 3, the monitoring device 9 can be configured to determine the status that the number clearer cuts at a winding machine wind is over-shooting or above a threshold th1, wherein based on the knowledge base kb adjustment information can be determined that a likelihood is above 75% that maintenance of carding machine card will decrease the number of clearer cuts. The adjustment information can be determined taking into account that the number of thick places is over shooting at the carding machine and at the second draw frame machine II. The adjustment information can be determined using the knowledge that in more than e.g. 50% of the cases, maintenance of the carding machine will decrease the number of clearer cuts. The adjustment information can be determined using machine settings of the carding machine, which indicate that more than 80% of the time has lapsed until next maintenance, wherein knowledge indicates that in more than e.g. 50% of the cases, maintenance of the carding machine will decrease the number of clearer cuts.

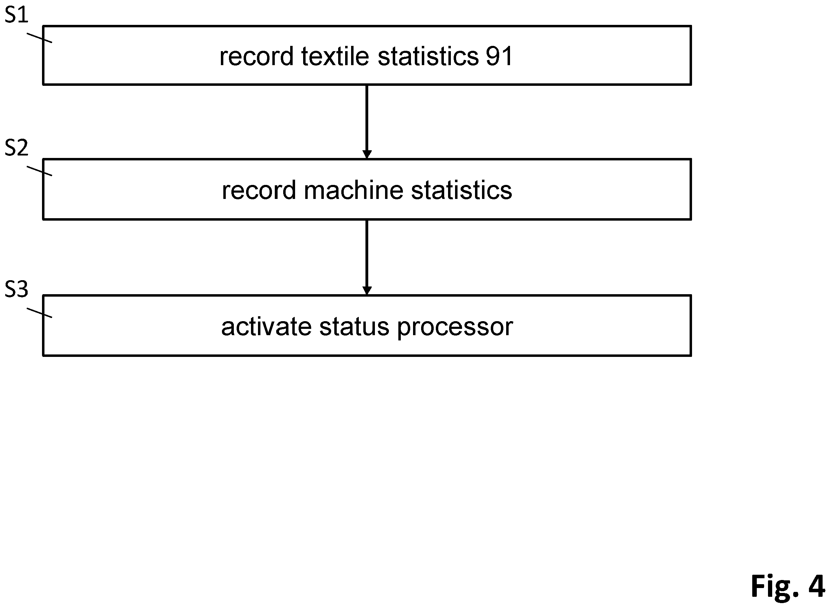

Fig. 4 illustrates schematically possible method steps of a method for determining status information S about a spinning mill M which comprises a plurality of textile machines 12, 23, 34, 45, 56, 67. At a monitoring device 9, the steps are performed of: recording S1 textile statistics 91 about textile irregularities in the textile materials 1, 2, 3, 4, 5, 6, 7 being processed by the textile machines 12, 23, 34, 45, 56, 67, recording S2 machine statistics 92 about machine faults at the textile machines 12, 23, 34, 45, 56, 67 during processing of the textile materials 1, 2, 3, 4, 5, 6, 7, activating S3 a status processor 94 for processing the textile statistics 91 and the machine statistics 92 for determining the status information S, for example based on one or more of a knowledge base kb, a set of rules rl and an artificial intelligence machine ai.

Finally, it should be noted that the term "comprising" does not exclude other elements or steps and the "a" or "an" does not exclude a plurality. Also elements described in association with different embodiments may be combined. It should also be noted that reference signs in the claims should not be construed as limiting the scope of the claims.

### Reference numerals/signs

- M: spinning mill
- 12,23,34,45,56,67: textile machines
- 1,2,3,4,5,6,7: textile materials
- 1: input textile material
- 7: output textile material
- T2,T3,T4,T5,T6: transport systems
- N: signaling network
- 9: monitoring device
- S: status information
- 91: textile statistics
- 92: machine statistics
- 93: machine settings
- 94: status processor
- kb: knowledge base
- mgt: spinning mill management system

## Claims

1. A monitoring device (9) for a spinning mill (M) for determining status information (S) about the spinning mill (M), wherein the spinning mill (M) comprises a plurality of textile machines (12,23,34,45,56,67) for processing textile materials (1,2,3,4,5,6,7), wherein the monitoring device (9) is configured to:
record textile statistics (91) about textile irregularities in the textile materials (1,2,3,4,5,6,7) being processed by the textile machines (12,23,34,45,56,67),
record machine statistics (92) about machine faults at the textile machines (12,23,34,45,56,67) during processing of the textile materials (1,2,3,4,5,6,7),
activate a status processor (94) for processing the textile statistics (91) and the machine statistics (92) for determining the status information (S), in particular based on one or more of a knowledge base (kb), a set of rules (rl) and an artificial intelligence machine (ai).

2. The monitoring device (9) according to claim 1, wherein processing the textile statistics (91) and the machine statistics (92) includes one or more of a correlation analysis, a cluster analysis, and a trend analysis.

3. The monitoring device (9) according to claim 1 or 2, wherein processing the textile statistics (91) and the machine statistics (92) relates to one of a single textile machine (12,23,45,56,67) and a group of textile machines (12,23,34,45,56,67).

4. The monitoring device (9) according to one of claims 1 to 3, wherein textile irregularities relate to a deviation from a nominal condition of one or more of a coefficient of a density and/or of a thickness, a coefficient of a variation of a density and/or a variation of a thickness, a spectrogram, a coefficient relating to short fibers, a coefficient relating to neps, and a coefficient relating to trash.

5. The monitoring device (9) according to one of claims 1 to 4, wherein the textile machines (12,23,34,45,56,67) relate to one or more of a blowroom machine, a carding machine, a draw frame machine, a carding preparation machine, a comber machine, a roving machine, a spinning machine, and a winding machine.

6. The monitoring device (9) according to one of claims 1 to 5, wherein machine faults relate to one or more of a roving break, a yarn break, and a clearer cut on a winder.

7. The monitoring device (9) according to one of claims 1 to 6, further configured to record machine settings (93) of one or more textile machines (12,23,34,45,56,67), wherein the status processor (94) is further configured for additionally processing the machine settings (93) for determining the status information (S).

8. The monitoring device (9) according to claim 7, wherein machine settings relate to one or more of a machine maintenance information and machine operating parameters.

9. The monitoring device (9) according to one of claims 1 to 8, wherein the status processor (94) is further configured to determine status information (S) which includes information about a malfunction within the spinning mill (M), preferably with information about a possible adjustment within the spinning mill (M) for resolving the malfunction, preferably together with information about a likelihood of success.

10. A spinning mill management system (mgt) for a spinning mill comprising a monitoring device (9) according to one of claims 1 to 9.

11. A method for determining status information (S) about a spinning mill (M) which comprises a plurality of textile machines (12,23,34,45,56,67) for processing textile materials (1,2,3,4,5,6,7), wherein at a monitoring device (9) the steps are performed of:
recording (S1) textile statistics (91) about textile irregularities in the textile materials (1,2,3,4,5,6,7) being processed by the textile machines (12,23,34,45,56,67),
recording (S2) machine statistics (92) about machine faults at the textile machines (12,23,34,45,56,67) during processing of the textile materials (1,2,3,4,5,6,7),
activating (S3) a status processor (94) for processing the textile statistics (91) and the machine statistics (92) for determining the status information (S), in particular based on one or more of a knowledge base (kb), a set of rules (rl) and an artificial intelligence machine (ai).

12. The method according to claim 11, wherein processing the textile statistics (91) and the machine statistics (92) includes one or more of a correlation analysis, a cluster analysis, and a trend analysis.

13. The method according to claim 11 or 12, wherein textile irregularities relate to a deviation from a nominal condition of one or more of a coefficient of a density and/or of a thickness, a coefficient of a variation of a density and/or a variation of a thickness, a spectrogram, a coefficient relating to short fibers, a coefficient relating to neps, and a coefficient relating to trash.

14. The method according to one of claims 11 to 13, wherein machine faults relate to one or more of a roving break, a yarn break, and a clearer cut on a winder.

15. The method according to one of claims 11 to 14, wherein at the monitoring device (9) the step is performed of: recording machine settings (93) of one or more textile machines (12,23,34,45,56,67), and activating the status processor (94) for additionally processing the machine settings (93) for determining the status information (S).
